# EUROPEAN PATENT APPLICATION

(11) **EP 4 450 532 A1**
(43) Date of publication of application: **23.10.2024**
(21) Application number: 22948455.5
(22) Date of filing: 30.06.2022
(51) Int. Cl.: C08G 18/77, C08G 18/79, C08G 18/78

(54) **HYDROPHILICALLY MODIFIED POLYISOCYANATE, AND PREPARATION METHOD THEREFOR AND USE THEREOF**

(71) Applicant: Wanhua Chemical Group Co., Ltd., Yantai, Shandong 264006 (CN)
(72) Inventor: YIN, Xundi, Shandong 264006 (CN); JIN, Yunquan, Shandong 264006 (CN); ZHANG, Yancheng, Shandong 264006 (CN); WANG, Cuicui, Shandong 264006 (CN); ZHOU, Cao, Shandong 264006 (CN); ZHANG, Mengxin, Shandong 264006 (CN); ZHAO, Kun, Shandong 264006 (CN)
(74) Representative: HGF
(86) International application number: PCT/CN2022/102626
(87) International publication number: WO 2024/000342

(57) **Abstract**

Provided in the present invention are a hydrophilically modified polyisocyanate, and a preparation method therefor and the use thereof. On the basis of the method provided in the present invention, the problems of a slow reaction rate, and resulting products having a high turbidity and being dark in color in existing sulfonic-acid modified polyisocyanate preparation processes can be effectively and synchronously ameliorated. The method comprises: reacting materials containing a component (a), a component (b) and an optional component (c) to obtain the hydrophilically modified polyisocyanate, wherein (a) is at least one polyisocyanate, (b) is at least one sulfamic acid, and (c) is at least one tertiary amine; and in the sulfamic acid, particles with a particle size of ≤ 900 meshes are less than 10 wt%, preferably less than 5 wt%, and more preferably less than 3 wt%, and particles with a particle size of > 40 meshes are less than 10 wt%, preferably less than 5 wt%, and more preferably less than 3 wt%.

## Description

### TECHNICAL FIELD

The present application relates to the field of modified polyisocyanate, and specifically relates to a hydrophilically-modified polyisocyanate, a preparation method therefor, and an application thereof.

### BACKGROUND

The waterborne isocyanate curing agents can be divided into polyether-modified polyisocyanate curing agents and sulfonic acid-modified polyisocyanate curing agents according to the hydrophilic group. The polyether-modified polyisocyanate curing agent has won widespread acceptance from the market, but it has the disadvantages of low effective isocyanate content and poor resistance because it introduces a large amount of polyether to obtain a good hydrophilicity, and these inherent disadvantages limit the application of such curing agent. The sulfonic acid-modified isocyanate curing agent has increasingly wide application due to the advantages of high functionality and easy dispersion. However, how to improve the production efficiency of the sulfonic acid-modified polyisocyanate, and how to obtain the product with light color and low turbidity are still one of the difficulties that plague those skilled in the art.

In the patent document CN1190450C, 3-(cyclohexylamino)-propanesulfonic acid and 2-(cyclohexylamino)-ethanesulfonic acid solid powder is used to prepare sulfonic acid-modified polyisocyanate, and the obtained modified polyisocyanates can be dispersed evenly in water without high shear force. In CN104448232B, the 4-(cyclohexylamino)-butanesulfonic acid solid powder is used to prepare sulfonic acid-modified polyisocyanate, and the sulfonic acid-modified polyisocyanate with excellent performance was also obtained. In the above two patent documents, the sulfonic acid solid powder is used to prepare the modified curing agent, and the reaction is a heterogeneous reaction, resulting in a long reaction time, dark product color, and high turbidity, and the color becomes darker as the storage time prolongs. In order to solve the disadvantages of product performance caused by the heterogeneous reaction, Patent CN110396173A and Patent CN110396165A independently propose to introduce free radical scavengers and/or peroxide decomposing agents, antioxidants, and other additives into the reaction system, but these solutions can only solve the problem of high color number, while cannot synchronously address the shortcomings of high turbidity and long reaction time of products.

### SUMMARY

The present application provides a hydrophilically-modified polyisocyanate, a preparation method therefor, and an application thereof, and the method based on the present application can effectively and synchronously solve the problems of slow reaction rate and high turbidity and dark color of the product in the prior preparation process of sulfonic acid-modified polyisocyanate.

In order to achieve this purpose, the present application provides the following technical solutions.

The present application provides a method for preparing a hydrophilically-modified polyisocyanate, and the method comprises subjecting materials containing a component (a), a component (b), and an optional component (c) to a reaction to obtain the hydrophilically-modified polyisocyanate;
(a) is at least one polyisocyanate,
(b) is at least one amino-sulfonic acid, and
(c) is at least one tertiary amine;
in the amino-sulfonic acid, particles with a particle size of ≤ 900 mesh are less than 10wt%, preferably less than 5wt%, and more preferably less than 3wt%, and particles with a particle size of > 40 mesh are less than 10wt%, preferably less than 5wt%, and more preferably less than 3wt%.

In some embodiments, the amino-sulfonic acid has a structure formula shown below: 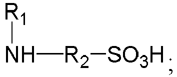 in the structural formula, R₁ is cyclohexyl, cyclohexylmethyl, p-methylcyclohexyl, 2-methylcyclohexyl, 2,3-dimethylcyclohexyl, 3,3,5-trimethylcyclohexyl, 4-tert-butylcyclohexyl, cycloheptyl, cyclooctylmethyl, norborn-2-yl, adamant-2-yl, or 3,5-dimethyl-adamant-1-yl, and R₂ is a linear or branched aliphatic group having 2 to 6 carbon atoms.

In some embodiments, the amino-sulfonic acid (b) is selected from one or more of 2-(cyclohexylamino)ethanesulfonic acid, 3-(cyclohexylamino)propanesulfonic acid, and 4-(cyclohexylamino)butanesulfonic acid.

In some embodiments, a component (d), a weak acid with pKa > 1, is also optionally added to the reaction system;
Preferably, a molar ratio of the weak acid to the amino-sulfonic acid is 0-0.3, and preferably 0.002-0.1.

In some embodiments, the component (d) is selected from one or more of dibutyl phosphate, bis(2-ethylhexyl) phosphate, phosphoric acid, or adipic acid.

In some embodiments, the method comprises subjecting materials containing the component (a), the component (b), the component (c), and the component (d) to a reaction to obtain the hydrophilically-modified polyisocyanate.

In some embodiments, a usage amount of the amino-sulfonic acid is 0.5-10% of a total mass of the polyisocyanate and the amino-sulfonic acid.

In some embodiments, a molar ratio of the tertiary amine to the amino-sulfonic acid is 0-1.1, preferably 0.9-1.1.

In some embodiments, the reaction is performed at 70-110°C.

In some embodiments, the polyisocyanate is an aliphatic polyisocyanate, a cycloaliphatic polyisocyanate, an araliphatic polyisocyanate, and/or an aromatic polyisocyanate; preferably, the polyisocyanate contains a structure of uretdione, isocyanurate, carbamate, allophanate, biuret, iminooxadiazinedione, and/or oxadiazinetrione; preferably, a diisocyanate used in the preparation of the polyisocyanate is selected from one or a combination of at least two of tetramethylene-1,4-diisocyanate, pentamethylene-1,5-diisocyanate, hexamethylene-1,6-diisocyanate, dodemethylene-1,12-diisocyanate, 1,4-cyclohexane diisocyanate, isophorone diisocyanate, 4,4'-dicyclohexylmethane diisocyanate, 4,4'-dicyclohexylpropane diisocyanate, 1,4-phenylene diisocyanate, 2,4-toluene diisocyanate, 2,6-toluene diisocyanate, 4,4'-diphenylmethane diisocyanate, 2,2'-diphenylmethane diisocyanate, 2,4'-diphenylmethane diisocyanate, tetramethylxylene diisocyanate, and *p*-xylylene diisocyanate.

In some embodiments, the tertiary amine is selected from one or more of N,N-dimethyl butylamine, N,N-diethylmethylamine, N,N-diisopropylethylamine, N,N-dimethyl cyclohexylamine, N-methylpiperidine, and N-ethylmorpholine.

In some embodiments, a catalyst is also optionally added to the reaction system, and the catalyst is selected from one or more of a tertiary amine catalyst which is different from the component (c) or an organometallic catalyst.

In some embodiments, an antioxidant is also optionally added to the reaction system.

The present application also provides a hydrophilically-modified polyisocyanate prepared by the above method.

The present application also provides an application of a hydrophilically-modified polyisocyanate prepared by the above method, or the above hydrophilically-modified polyisocyanate, and the above hydrophilically-modified polyisocyanate can be used in the preparation of a coating agent, an adhesive, or a sealant, or as a starting component in the production of polyurethane plastic.

The technical solution provided by the present application has the following beneficial effects:
the inventor unexpectedly found that based on the prior preparation process of sulfonic acid-modified polyisocyanate, by using an amino sulfonic acid raw material meeting the specific particle size requirements, it is possible to effectively address the shortcomings of low production efficiency, and high turbidity and dark color of the product at the same time.

### DETAILED DESCRIPTION

In order to facilitate the understanding of the present application, the present application will be further described below with reference to the embodiments. It should be understood that the following embodiments are intended only for a better understanding of the present application and do not mean that the present application is limited to the following embodiments.

Unless otherwise defined, all technical terms and scientific terms used herein have the same meanings as generally understood by those skilled in the art to which the present application pertains. The term "and/or" which may be used herein comprises any and all combinations of one or more related listed items.

Embodiments where the specific experimental steps or conditions are not indicated can be performed according to the operation or conditions of the corresponding conventional experiment steps in the technical field. The reagents or instruments used without indicating the manufacturer are conventional products that can be obtained through the market.

The present application provides a method for preparing a hydrophilically-modified polyisocyanate, and the method comprises reacting materials containing a component (a), a component (b), and an optional component (c) to obtain the hydrophilically-modified polyisocyanate;
(a) is at least one polyisocyanate,
(b) is at least one amino-sulfonic acid, and
(c) is at least one tertiary amine;
in the component (b) amino-sulfonic acid, particles with a particle size of ≤ 900 mesh are less than 10wt%, preferably less than 5wt%, and more preferably less than 3wt%, and particles with a particle size of > 40 mesh are less than 10wt%, preferably less than 5wt%, and more preferably less than 3wt%.

The present application provides a solution formed by improving the prior hydrophilically-modified polyisocyanate process. The inventor found that in the process of preparing hydrophilically-modified polyisocyanate by reacting the amino-sulfonic acid, polyisocyanate, optional tertiary amine and other materials, the reaction between the amino-sulfonic acid of solid particles and polyisocyanate is heterogeneous, which has a low reaction rate, and the unreacted amino-sulfonic acid is easy to exist in the product in the form of particles, which results in a high turbidity of the product, and also continues to cause an increase in the color number during the product storage. The excessive amino-sulfonic acid residue will also seriously affect the stability of the emulsion in the process of compounding the hydrophilically-modified polyisocyanate used as a curing agent with the waterborne emulsion; in addition, the increase of the color number of the product can also seriously affect the appearance of the waterborne emulsion products. In the prior art, in order to make the amino-sulfonic acid react more completely, the conventional method is to extend the reaction time and increase the reaction temperature, and the prolonged high temperature in the preparation process can also oxidize the unreacted amino-sulfonic acid to change color, resulting in an increase in the color number of the product. How to obtain a hydrophilically-modified polyisocyanate (sulfonic acid-modified polyurethane) with low turbidity and low color score with improving the production efficiency has become one of the technical difficulties in this field. It is generally believed that as the particle size is larger, the specific surface area is smaller, and the reaction rate is lower, and on the contrary, as the particle size is smaller, the specific surface area is larger, and the reaction rate is faster. After long-term exploration, the inventor unexpectedly found that in a case where the particle size of the amino-sulfonic acid particles is smaller than a certain value, the production efficiency becomes slower and the turbidity of the product is increased, which is contrary to the regular experience. In a case where the particle size of amino-sulfonic acid is controlled to meet the requirement that the particles with a particle size of ≤ 900 mesh are less than 10wt%, preferably less than 5wt%, and more preferably less than 3wt%, and the particles with a particle size of > 40 mesh are less than 10wt%, preferably less than 5wt%, and more preferably less than 3wt%, the production efficiency can be effectively improved, and the turbidity of the product can be reduced and the color of the obtained product can be lighter.

In the method of the present application, for the amino-sulfonic acid added in the reaction system, the particles with a particle size of ≤ 900 mesh are less than 10wt%, and the particles with a particle size of > 40 mesh are less than 10wt%; under the condition that the particle size of the amino-sulfonic acid meets this basic requirement, for the amino-sulfonic acid added in the reaction system, the particles with a particle size of ≤ 900 mesh are more preferably less than 5wt%, and further preferably less than 3wt%, which can further reduce the turbidity and color number of the product; similarly, under the condition that the particle size of amino-sulfonic acid meets the above basic requirements, for the amino-sulfonic acid added in the reaction system, the particles with a particle size of > 40 mesh are more preferably less than 5wt%, and further preferably less than 3wt%, which can further reduce the turbidity and color number of the product. In some embodiments, a particle size D of the amino-sulfonic acid added in the reaction system is, for example, 900 mesh < D ≤ 40 mesh, 800 mesh < D ≤ 50 mesh, 700 mesh < D ≤ 60 mesh, 60 mesh < D ≤ 40 mesh, 200 mesh < D ≤ 100 mesh, 400 mesh < D ≤ 200 mesh, 900 mesh < D ≤ 400 mesh, and 100 mesh < D ≤ 60 mesh. As is well known to those skilled in the art, "mesh" represents the mesh number of the screen, and as the mesh number is larger, the particle size of the screen underflow obtained by filtration with the screen is smaller. The control of the particle size of the amino-sulfonic acid can be achieved by conventional screen filtration; for example, the product obtained from the preparation of amino-sulfonic acid is filtered and graded by a screen with a required mesh number to obtain the desired particle size; alternatively, the purchased amino-sulfonic acid is dispersed with acetone and then filtered and graded by a screen with a required mesh number; alternatively, the purchased amino-sulfonic acid is ground, and then filtered and graded by a screen with a required mesh number.

In some embodiments, a component (d), a weak acid with pKa > 1, is also optionally added to the reaction system in the method of the present application. In some embodiments, the weak acid is preferably one or more of dibutyl phosphate, bis(2-ethylhexyl)phosphate, phosphoric acid, or adipic acid. In a preferred embodiment, the above weak acid is added to the reaction system. A molar ratio of the weak acid to the amino-sulfonic acid can be 0-0.3, and preferably 0.002-0.1 (e.g., 0.002, 0.005, 0.01, 0.05, 0.1). The inventor found that in a case where the amino-sulfonic acid satisfying the particle size requirements of the present application is used, and meanwhile a weak acid having pKa (acidity constant) > 1 is added, it can be achieved to further improve the production efficiency and reduce the turbidity and color number of the product under the same process conditions.

In some embodiments, the method of the present application comprises reacting materials containing the component (a), the component (b), the component (c), and the component (d) to obtain the hydrophilically-modified polyisocyanate.

In the method of the present application, the used polyisocyanate, amino-sulfonic acid, and tertiary amine are all raw materials conventionally used in the preparation process of the hydrophilically-modified polyisocyanate (sulfonic acid-modified polyisocyanate) in the field, the selection of the specific compounds can refer to the conventional selection in the art, and the present application has no special restrictions on the selection of specific compounds of the above raw materials.

In some embodiments, the used component (b) amino-sulfonic acid has a structure formula shown below: 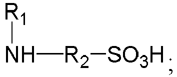 wherein R₁ is cyclohexyl, cyclohexylmethyl, *p*-methylcyclohexyl, 2-methylcyclohexyl, 2,3-dimethylcyclohexyl, 3,3,5-trimethylcyclohexyl, 4-*tert*-butylcyclohexyl, cycloheptyl, cyclooctylmethyl, norborn-2-yl, adamant-2-yl, or 3,5-dimethyl-adamant-1-yl, and R₂ is a linear or branched aliphatic group having 2 to 6 carbon atoms. In some embodiments, the amino-sulfonic acid is selected from one or more of 2-(cyclohexylamino)ethanesulfonic acid, 3-(cyclohexylamino)propanesulfonic acid, or 4-(cyclohexylamino)butanesulfonic acid; in some embodiments, the amino-sulfonic acid is selected from 3-(cyclohexylamino)propanesulfonic acid and/or 4-(cyclohexylamino)butanesulfonic acid. When the component (c) tertiary amine is used simultaneously in the reaction system, the amino-sulfonic acid can be partially or completely neutralized into salts by the tertiary amine before, during or after reacting with polyisocyanate.

In some embodiments, the polyisocyanate is an aliphatic polyisocyanate, a cycloaliphatic polyisocyanate, an araliphatic polyisocyanate, and/or an aromatic polyisocyanate. In some embodiments, the polyisocyanate has an average isocyanate functionality of 2.0-5.0 and a NCO content of 7.0-32.0wt%, and as the component (a) of the present application, the polyisocyanate can be an unmodified or modified polyisocyanate.

In some embodiments, the polyisocyanate contains a structure of uretdione, isocyanurate, carbamate, allophanate, biuret, iminooxadiazinedione, and/or oxadiazinetrione, and thus the obtained hydrophilically-modified polyisocyanate also correspondingly contains one or more of the above structures. The above polyisocyanates can be prepared from one or more of an aliphatic diisocyanate, a cycloaliphatic diisocyanate, an aromatic diisocyanate, and/or an araliphatic diisocyanate according to the prior methods, for example, with reference to the method described in patent documents DE1670666A, DE1954093A, DE2414413A, DE2452532A, DE2641380A, DE3700209A, DE3900053A, DE3928503A, EP0336205A, EP0339396A, and EP0798299A.

The suitable diisocyanate for preparing the above polyisocyanate containing a structure of uretdione, isocyanurate, carbamate, allophanate, biuret, iminooxadiazinedione, and/or oxadiazinetrione is those obtained by the phosgene or non-phosgene process, for example, any diisocyanate obtained by thermal decomposition of ethyl carbamate. In some embodiments, the diisocyanate is a diisocyanate with aliphatic bonds, cycloaliphatic bonds, araliphatic bonds, and/or aromatic bonds having a molecular mass of 100-500, which is selected from, for example, one or a combination of at least two of tetramethylene-1,4-diisocyanate, pentamethylene-1,5-diisocyanate, hexamethylene-1,6-diisocyanate, dodemethylene-1,12-diisocyanate, 1,4-cyclohexane diisocyanate, isophorone diisocyanate, 4,4'-dicyclohexylmethane diisocyanate, 4,4'-dicyclohexylpropane diisocyanate, 1,4-phenylene diisocyanate, 2,4-toluene diisocyanate, 2,6-toluene diisocyanate, 4,4'-diphenylmethane diisocyanate, 2,2'-diphenylmethane diisocyanate, 2,4'-diphenylmethane diisocyanate, tetramethylxylene diisocyanate, and *p*-xylylene diisocyanate. In some preferred embodiments, the polyisocyanate is a polyisocyanate having isocyanurate group based on one or more of the hexamethylene-1,6-diisocyanate (HDI), isophorone diisocyanate (IPDI), and 4,4'-dicyclohexylmethane diisocyanate (H₁₂MDI).

In some embodiments, in the preparation process of hydrophilically-modified polyisocyanate containing a structure of uretdione, isocyanurate, carbamate, allophanate, biuret, iminooxadiazinedione, and/or oxadiazinetrione, an antioxidant, a free radical scavenger, an inhibitor, and other additives can be added, and the specific amount of the additives can be the conventional amount in the field, and the specific amount can be also determined by those skilled in the art according to product demands.

In some embodiments, the tertiary amine as the component (c) can be those conventionally used in this technical field. In some embodiments, the tertiary amine as the component (c) is selected from one or more of N,N-dimethyl butylamine, N,N-diethyl methylamine, N,N-diisopropyl ethylamine, N,N-dimethyl cyclohexylamine, N-methylpiperidine, and N-ethylmorpholine. The tertiary amine as the component (c) is used not only to neutralize the sulfonic acid group in the amino-sulfonic acid to form sulfonate salt, but also as a phase transfer catalyst to catalyze the reaction of polyisocyanate and amino-sulfonic acid.

In some embodiments, in the method for preparing hydrophilically-modified polyisocyanate of the present application, other materials that are allowed to be added can also be added based on the conventional process of preparing hydrophilically-modified polyisocyanate from polyisocyanate, amino-sulfonic acid, and optional tertiary amine, for example, an additional catalyst can be added, which is, for example, one or more of a tertiary amine catalyst which is different from the component (c) or an organometallic catalyst; the tertiary amine catalyst can be selected from, for example, but not limited to: one or more of pyridine, methylpyridine, benzyldimethylamine, or N,N-dimethylpiperazine; the organometallic catalyst can be selected from, for example, but not limited to: one or a mixture of at least two of aluminum tris(ethyl acetoacetate), tin *n*-octoate, zinc *n*-octoate, tin(II) 2-ethyl-1-hexanoate, dibutyltin(IV) dichloride, dibutyltin(IV) diacetate, dibutyltin(IV) dilaurate, dioctyltin(IV) diacetate, or molybdenum glycolate. The usage amount of these conventional catalysts can be easily determined by those skilled in the art according to the reaction requirements, for example, 10-2000 ppm of the total weight of the reaction material, preferably 100-500 ppm.

In some embodiments, in the method for preparing hydrophilically-modified polyisocyanate of the present application from polyisocyanate and amino-sulfonic acid in the presence of the tertiary amine, a solvent inert to react the NCO can be selected to perform the reaction; the solvent can be, but not limited to, for example, one or a mixture of at least two of acetone, butanone, cyclopentanone, cyclohexanone, ethyl acetate, butyl acetate, tetrahydrofuran, N-methylpyrrolidone, N-ethylpyrrolidone, toluene, xylene, chlorobenzene, propylene glycol methyl ether acetate, 1-methoxy-2-propylacetate, 3-methoxy-*n*-butyl acetate, an aromatic compound, dimethyl carbonate, diethyl carbonate, butyrolactone, caprolactone, and methyl caprolactone.

In some embodiments, in the method for preparing hydrophilically-modified polyisocyanate of the present application, the antioxidant can also be added to further reduce the color number, but the antioxidant does not have to be added. The antioxidant can be those conventionally added in this field, which can be, for example, an aromatic amine, a hindered phenol, and a derivative thereof which can eliminate free radicals, and also can be an antioxidant that can decompose hydroperoxide, such as a phosphorus-containing and sulfur-containing organic compound, or a combination thereof. Those skilled in the art can easily determine the additive amount of the antioxidant according to actual requirements; for example, the additive amount of the antioxidant is 0-1.5% of the total mass of the polyisocyanate (a) and the amino-sulfonic acid (b).

In the method of the present application, the usage amounts of the amino-sulfonic acid, the polyisocyanate, and the tertiary amine are conventional choices in this field. In some embodiments, the usage amount of the amino-sulfonic acid is 0.5-10% of the total mass of the polyisocyanate and the amino-sulfonic acid; a molar ratio of the tertiary amine to the amino-sulfonic acid is 0-1.1, preferably 0.9-1.1.

In some embodiments, in the method of the present application, in the presence of the optional tertiary amine (c), the polyisocyanate (a) and the amino-sulfonic acid (b) are reacted under the condition of 70-110°C, wherein the polyisocyanate (a) can be fed in one step or more steps. The judgment of the reaction endpoint is well known to those skilled in the art, which can be determined, for example, by testing the NCO content; for example, when the NCO content reaches the theoretical value ± 0.1%, it can be concluded that the reaction endpoint has been reached; of course, whether to prolong the reaction time can also be considered based on the transparency of the reaction product, and for example, if the reaction product is turbid, the reaction time can be prolonged.

By the method of the present application, the hydrophilically-modified polyisocyanate with a significantly reduced turbidity and color number can be obtained, and based on this, the present application also provides a hydrophilically-modified polyisocyanate prepared by the above method.

The present application also provides an application of the above hydrophilically-modified polyisocyanate, and the hydrophilically-modified polyisocyanate can be used for preparing a coating agent, an adhesive or a sealant, or as a starting component for producing a polyurethane plastic, and specifically, for example, as a cross-linking agent used in a waterborne two-component coating and adhesive. The hydrophilically-modified polyisocyanate provided in the present application can be used as a starting component for preparing a blocked polyisocyanate which is water-dispersible or in the form of dispersion in water, and a suitable blocking agent is, for example, one or more of methyl ethyl ketone oxime, 3,5-dimethylpyrazole, diethyl malonate, ethyl acetoacetate, imidazole, or ε-caprolactam. In addition to being used as a cross-linking component for the two-component coating and adhesive, the hydrophilically-modified polyisocyanate of the present application can be used as a cross-linking agent for fabric finishing, pigment printing binder, and used for cross-linking other waterborne dispersions, or as an auxiliary in moisturizing paper.

The present application is further described exemplarily in terms of the embodiments below, and it should be noted that the present application is limited to the following embodiments.
Polyisocyanate a1: (Wanhua Chemical Wannate^{®} HT-100, the polyisocyanate based on HDI, NCO content = 21.7-22.2wt%)
Polyisocyanate a2: (Bayer NZ1, the polyisocyanate based on HDI and IPDI, NCO content = 20wt%)
Amino-sulfonic acid b1: cyclohexylamine and 1,4-butanesultone were reacted with a molar ratio of 3:1 in dioxane solvent at 80°C for 6 h, and filtered with a 40-mesh screen, the filtrate was removed, and the collected solid on the 40-mesh screen was washed with acetone to white, and dried to obtain 4-(cyclohexylamino)butanesulfonic acid b1 with a particle size D of > 40 mesh and a purity of > 99.5%.
Amino-sulfonic acid b2: cyclohexylamine and 1,4-butanesultone were reacted with a molar ratio of 3:1 in dioxane solvent at 80°C for 6 h, and large particles were filtered out with a 40-mesh screen, and then the filtrate was filtered with a 60-mesh screen, the filtrate was removed, and the collected solid on the 60-mesh screen was washed with acetone to white, and dried to obtain 4-(cyclohexylamino)butanesulfonic acid b2 with a particle size D of 60 mesh < D ≤ 40 mesh and a purity of > 99.5%.
Amino-sulfonic acid b3: cyclohexylamine and 1,4-butanesultone were reacted with a molar ratio of 3:1 in dioxane solvent at 80°C for 6 h, and large particles were filtered out with a 100-mesh screen, and then the filtrate was filtered with a 200-mesh screen, the filtrate was removed, and the collected solid on the 200-mesh screen was washed with acetone to white, and dried to obtain 4-(cyclohexylamino)butanesulfonic acid b3 with a particle size D of 200 mesh < D ≤ 100 mesh and a purity of > 99.5%.
Amino-sulfonic acid b4: cyclohexylamine and 1,4-butanesultone were reacted with a molar ratio of 3:1 in dioxane solvent at 80°C for 6 h, and large particles were filtered out with a 200-mesh screen, and then the filtrate was filtered with a 400-mesh screen, the filtrate was removed, and the collected solid on the 400-mesh screen was washed with acetone to white, and dried to obtain 4-(cyclohexylamino)butanesulfonic acid b4 with a particle size D of 400 mesh < D ≤ 200 mesh and a purity of > 99.5%.
Amino-sulfonic acid b5: cyclohexylamine and 1,4-butanesultone were reacted with a molar ratio of 3:1 in dioxane solvent at 80°C for 6 h, and large particles were filtered out with a 400-mesh screen, and then the filtrate was filtered with a 900-mesh screen, the filtrate was removed, and the collected solid on the 900-mesh screen was washed with acetone to white, and dried to obtain 4-(cyclohexylamino)butanesulfonic acid b5 with a particle size D of 900 mesh < D ≤ 400 mesh and a purity of > 99.5%.
Amino-sulfonic acid b6: cyclohexylamine and 1,4-butanesultone were reacted with a molar ratio of 3:1 in dioxane solvent at 80°C for 6 h, and large particles were filtered out with a 900-mesh screen, and then the filtrate was filtered with a 1250-mesh screen, the filtrate was removed, and the collected solid on the 1250-mesh screen was washed with acetone to white, and dried to obtain 4-(cyclohexylamino)butanesulfonic acid b6 with a particle size D of 1250 mesh < D ≤ 900 mesh and a purity of > 99.5%.
Amino-sulfonic acid b7: cyclohexylamine and 1,3-propanesultone were reacted with a molar ratio of 3:1 in dioxane solvent at 30°C for 5 h, and large particles were filtered out with a 60-mesh screen, and then the filtrate was filtered with a 100-mesh screen to collect the solid, the filtrate was removed, and the collected solid on the 100-mesh screen was washed with acetone to white, and dried to obtain 3-(cyclohexylamino)propanesulfonic acid with a particle size D of 100 mesh < D ≤ 60 mesh and a purity of > 99.5%.
Tertiary amine c1: N,N-dimethylcyclohexylamine, purchased from J&K Chemicals, purity 99%.
Tertiary amine c2: N-ethylmorpholine, purchased from J&K Chemicals, purity 99%.
Weak acid d1: dibutyl phosphate, purchased from Aladdin Chemicals, purity 96%.

Testing method:
1. Standard for determination of NCO content: GB/T 12009.4-2016;
2. Standard for determination of Viscosity: Brookfield LV 63#/3 rpm, 25°C;
3. Standard for determination of Color number: using 723C visible spectrophotometer from Shanghai Metash Instrument Co., Ltd., and using Hazen scale for measurement;
4. Standard for determination of Turbidity: using HACH 2100Q Portable Turbidimeter for measurement, in NTU; and
5. SO₃⁻ content: obtained by theoretical calculation.

### Example 1

In a four-neck round-bottom flask equipped with a mechanical stirrer, a reflux condenser, a thermometer, and a nitrogen inlet and an outlet, 380 g (1.99 mol) of polyisocyanate a1, 19.75 g (0.084 mol) of amino-sulfonic acid b2, and 10.67 g (0.084 mol) of tertiary amine c1 were added to the reaction system at 50°C with stirring at 200 rpm, and mixed uniformly, heated to 100°C, and reacted for 5 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.46wt%;
viscosity (25°C): 5600 mPa·s;
SO₃⁻ content: 1.64wt%;
color number: 9; and
turbidity: 0.5.

### Example 2

In a four-neck round-bottom flask equipped with a mechanical stirrer, a reflux condenser, a thermometer, and a nitrogen inlet and an outlet, 380 g (1.99 mol) of polyisocyanate a1, 18.57 g (0.084 mol) of amino-sulfonic acid b7, and 10.67 g (0.084 mol) of tertiary amine c1 were added to the reaction system at 50°C with stirring at 200 rpm, mixed uniformly, heated to 70°C, and reacted for 7 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.50wt%;
viscosity (25°C): 5300 mPa·s;
SO₃⁻ content: 1.64wt%;
color number: 4; and
turbidity: 0.2.

### Example 3

In a four-neck round-bottom flask equipped with a mechanical stirrer, a reflux condenser, a thermometer, and a nitrogen inlet and an outlet, 380 g (1.99 mol) of polyisocyanate a1, 19.75 g (0.084 mol) of amino-sulfonic acid b3, and 10.67 g (0.084 mol) of tertiary amine c1 were added to the reaction system at 50°C with stirring at 300 rpm, mixed uniformly, heated to 90°C, and reacted for 6 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.45wt%;
viscosity (25°C): 5800 mPa·s;
SO₃⁻ content: 1.64wt%;
color number: 6; and
turbidity: 0.2.

### Example 4

In a four-neck round-bottom flask equipped with a mechanical stirrer, a reflux condenser, a thermometer, and a nitrogen inlet and an outlet, 380 g (1.99 mol) of polyisocyanate a1, 19.75 g (0.084 mol) of amino-sulfonic acid b4, and 9.66 g (0.084 mol) of tertiary amine c2 were added to the reaction system at 50°C with stirring at 300 rpm, mixed uniformly, heated to 80°C, and reacted for 8 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.47wt%;
viscosity (25°C): 5400 mPa·s;
SO₃⁻ content: 1.64wt%;
color number: 10; and
turbidity: 0.2.

### Example 5

In a four-neck round-bottom flask equipped with a mechanical stirrer, a reflux condenser, a thermometer, and a nitrogen inlet and an outlet, 380 g (1.99 mol) of polyisocyanate a1, 19.75 g (0.084 mol) of amino-sulfonic acid b5, and 10.67 g (0.084 mol) of tertiary amine c1 were added to the reaction system at 50°C with stirring at 200 rpm, mixed uniformly, heated to 110°C, and reacted for 5 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.43wt%;
viscosity (25°C): 5900 mPa·s;
SO₃⁻ content: 1.64wt%;
color number: 10; and
turbidity: 0.4.

### Example 6

In a four-neck round-bottom flask equipped with a mechanical stirrer, a reflux condenser, a thermometer, and a nitrogen inlet and an outlet, 380 g (1.99 mol) of polyisocyanate a1, 17.97 g (0.076 mol) of amino-sulfonic acid b3, 1.78 g (0.008 mol) of amino-sulfonic acid b1, and 10.67 g (0.084 mol) of tertiary amine c1 were added to the reaction system at 50°C with stirring at 200 rpm, mixed uniformly, heated to 100°C, and reacted for 5 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.47wt%;
viscosity (25°C): 5500 mPa·s;
SO₃⁻ content: 1.64wt%;
color number: 26; and
turbidity: 1.2.

### Example 7

In a four-neck round-bottom flask equipped with a mechanical stirrer, a reflux condenser, a thermometer, and a nitrogen inlet and an outlet, 380 g (1.99 mol) of polyisocyanate a1, 18.86 g (0.08 mol) of amino-sulfonic acid b3, 0.89 g (0.004 mol) of amino-sulfonic acid b1, and 10.67 g (0.084 mol) of tertiary amine c1 were added to the reaction system at 50°C with stirring at 200 rpm, mixed uniformly, heated to 100°C, and reacted for 5 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.45wt%;
viscosity (25°C): 5500 mPa·s;
SO₃⁻ content: 1.64wt%;
color number: 13; and
turbidity: 0.7.

### Example 8

In a four-neck round-bottom flask equipped with a mechanical stirrer, a reflux condenser, a thermometer, and a nitrogen inlet and an outlet, 380 g (1.99 mol) of polyisocyanate a1, 17.97 g (0.076 mol) of amino-sulfonic acid b4, 1.78 g (0.008 mol) of amino-sulfonic acid b6, and 10.67 g (0.084 mol) of tertiary amine c1 were added to the reaction system at 50°C with stirring at 200 rpm, mixed uniformly, heated to 100°C, and reacted for 5 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.45wt%;
viscosity (25°C): 5600 mPa·s;
SO₃⁻ content: 1.64wt%;
color number: 32; and
turbidity: 1.5.

### Example 9

In a four-neck round-bottom flask equipped with a mechanical stirrer, a reflux condenser, a thermometer, and a nitrogen inlet and an outlet, 380 g (1.99 mol) of polyisocyanate a1, 18.86 g (0.08 mol) of amino-sulfonic acid b3, 0.89 g (0.004 mol) of amino-sulfonic acid b6, and 10.67 g (0.084 mol) of tertiary amine c1 were added to the reaction system at 50°C with stirring at 200 rpm, mixed uniformly, heated to 100°C, and reacted for 5 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.41wt%;
viscosity (25°C): 6100 mPa·s;
SO₃⁻ content: 1.64wt%;
color number: 14; and
turbidity: 0.9.

### Example 10

In a four-neck round-bottom flask equipped with a mechanical stirrer, a reflux condenser, a thermometer, and a nitrogen inlet and an outlet, 380 g (1.81 mol) of polyisocyanate a2, 19.75 g (0.084 mol) of amino-sulfonic acid b2, and 10.67 g (0.084 mol) of tertiary amine c1 were added to the reaction system at 50°C with stirring at 200 rpm, mixed uniformly, heated to 100°C, and reacted for 5 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 17.60wt%;
viscosity (25°C): 5200 mPa·s;
SO₃⁻ content: 1.64wt%;
color number: 8; and
turbidity: 0.2.

### Example 11 (having a weak acid added; compared to Example 8)

In a four-neck round-bottom flask equipped with a mechanical stirrer, a reflux condenser, a thermometer, and a nitrogen inlet and an outlet, 380 g (1.99 mol) of polyisocyanate a1, 17.97 g (0.076 mol) of amino-sulfonic acid b4, 1.78 g (0.008 mol) of amino-sulfonic acid b6, 10.67 g (0.084 mol) of tertiary amine c1, and 0.21 g (0.001 mol) of weak acid d1 were added to the reaction system at 50°C with stirring at 200 rpm, mixed uniformly, heated to 100°C, and reacted for 5 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.47wt%;
viscosity (25°C): 5500 mPa·s;
SO₃⁻ content: 1.64wt%;
color number: 16; and
turbidity: 0.9.

### Comparative Example 1 (compared to Example 1)

In a four-neck round-bottom flask equipped with a mechanical stirrer, a reflux condenser, a thermometer, and a nitrogen inlet and an outlet, 380 g (1.99 mol) of polyisocyanate a1, 19.75 g (0.084 mol) of amino-sulfonic acid b1, and 10.67 g (0.084 mol) of tertiary amine c1 were added to the reaction system at 50°C with stirring at 200 rpm, mixed uniformly, heated to 110°C, and reacted for 8 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.48wt%;
viscosity (25°C): 5400 mPa·s;
SO₃⁻ content: 1.64wt%;
color number: 80; and
turbidity: 6.

As compared to Example 1, Comparative Example 1 uses amino-sulfonic acid b1 with a particle size of > 40 mesh to prepare the modified polyisocyanate, resulting in a higher required reaction temperature and longer required reaction time, a significant decrease in the reaction efficiency, and a significant increase in the color number and turbidity of the prepared product.

### Comparative Example 2 (compared to Example 1)

In a four-neck round-bottom flask equipped with a mechanical stirrer, a reflux condenser, a thermometer, and a nitrogen inlet and an outlet, 380 g (1.99 mol) of polyisocyanate a1, 19.75 g (0.084 mol) of amino-sulfonic acid b6, and 10.67 g (0.084 mol) of tertiary amine c1 were added to the reaction system at 50°C with stirring at 200 rpm, mixed uniformly, heated to 110°C, and reacted for 8 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.47wt%;
viscosity (25°C): 5600 mPa·s;
SO₃⁻ content: 1.64wt%;
color number: 130; and
turbidity: 8.8.

As compared to Example 1, Comparative Example 2 uses amino-sulfonic acid b1 with a particle size D of 1250 mesh < D ≤ 900 mesh to prepare the modified polyisocyanate, resulting in a higher required reaction temperature and longer required reaction time, a significant decrease in the reaction efficiency, and a significant increase in the color number and turbidity of the prepared product.

### Comparative Example 3 (compared to Example 9)

In a four-neck round-bottom flask equipped with a mechanical stirrer, a reflux condenser, a thermometer, and a nitrogen inlet and an outlet, 380 g (1.99 mol) of polyisocyanate a1, 16.79 g (0.071 mol) of amino-sulfonic acid b3, 2.96 g (0.013 mol) of amino-sulfonic acid b6, and 10.67 g (0.084 mol) of tertiary amine c1 were added to the reaction system at 50°C with stirring at 200 rpm, mixed uniformly, heated to 100°C, and reacted for 8 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.45wt%;
viscosity (25°C): 5800 mPa·s;
SO₃⁻ content: 1.64wt%;
color number: 65; and
turbidity: 2.4.

As compared to Example 9, Comparative Example 3 increases the proportion of amino-sulfonic acid b6 with a particle size D of 1250 mesh < D ≤ 900 mesh to more than 10wt% in the amino-sulfonic acid, so that the required reaction time is longer, the reaction efficiency is decreased, and the color number and turbidity of the prepared product are significantly higher.

### Comparative Example 4 (compared to Example 7)

In a four-neck round-bottom flask equipped with a mechanical stirrer, a reflux condenser, a thermometer, and a nitrogen inlet and an outlet, 380 g (1.99 mol) of polyisocyanate a1, 16.79 g (0.071 mol) of amino-sulfonic acid b3, 2.96 g (0.013 mol) of amino-sulfonic acid b1, and 10.67 g (0.084 mol) of tertiary amine c1 were added to the reaction system at 50°C with stirring at 200 rpm, mixed uniformly, heated to 100°C, and reacted for 8 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.50wt%;
viscosity (25°C): 5300 mPa·s;
SO₃⁻ content: 1.64wt%;
color number: 84; and
turbidity: 2.8.

As compared to Example 7, this comparative example increases the proportion of amino-sulfonic acid b1 with a particle size of > 40 mesh to more than 1 wt% in the amino-sulfonic acid, so that the required reaction time is longer, the reaction efficiency is decreased, and the color number and turbidity of the prepared product are significantly higher.

### Comparative Example 5 (compared to Example 10)

In a four-neck round-bottom flask equipped with a mechanical stirrer, a reflux condenser, a thermometer, and a nitrogen inlet and an outlet, 380 g (1.81 mol) of polyisocyanate a2, 19.75 g (0.084 mol) of amino-sulfonic acid b6, and 10.67 g (0.084 mol) of tertiary amine c1 were added to the reaction system at 50°C with stirring at 200 rpm, mixed uniformly, heated to 100°C, and reacted for 10 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.55wt%;
viscosity (25°C): 4900 mPa·s;
SO₃⁻ content: 1.64wt%;
color number: 170; and
turbidity: 12.

As compared to Example 10, the amino-sulfonic acid used is the amino-sulfonic acid b6 with particle size D of 1250 mesh < D ≤ 900 mesh, so that the required reaction time is longer, the reaction efficiency is decreased, and the color number and turbidity of the prepared product are significantly higher.

### Comparative Example 6

In a four-neck round-bottom flask equipped with a mechanical stirrer, a reflux condenser, a thermometer, and a nitrogen inlet and an outlet, 380 g (1.99 mol) of polyisocyanate a1, 19.75 g (0.084 mol) of amino-sulfonic acid b6, 10.67 g (0.084 mol) of tertiary amine c1, and 0.21 g (0.001 mol) of weak acid d1 were added to the reaction system at 50°C with stirring at 200 rpm, mixed uniformly, heated to 110°C, and reacted for 8 h, and then the reaction was stopped, and the reaction system was filtered through a 325-mesh filter, and cooled to room temperature to obtain an amino-sulfonic acid-modified polyisocyanate with the following characteristic data:
solid content: 100wt%;
NCO content: 19.48wt%;
viscosity (25°C): 5500 mPa·s;
SO₃⁻ content: 1.64wt%;
color number: 115; and
turbidity: 6.8.

It can be seen from Examples 1-10 and Comparative Examples 1-5 that by controlling the proportions of the amino-sulfonic acid with a particle size larger than 40 mesh and the amino-sulfonic acid with a particle size smaller than or equal to 900 mesh in the amino-sulfonic acid of the reaction system, a hydrophilically-modified polyisocyanate with smaller color number and low turbidity can be obtained at a relatively higher reaction rate. By comparing Example 11, Example 8, Comparative Example 6, and Comparative Example 2, it can be seen that under the condition that the particle size of amino-sulfonic acid is controlled to meet the requirements of the present application, the further introduction of the weak acid can further reduce the color number and turbidity of the product significantly.

It is easy to understand that the above embodiments are only examples for clear illustration and do not mean that the present application is limited thereto. For those of ordinary skill in the art, other variations or changes may be made on the basis of the above description. It is not necessary or possible to exhaust all embodiments herein. Obvious variations or changes derived therefrom are still within the protection scope of the present application.

## Claims

1. A method for preparing a hydrophilically-modified polyisocyanate, which comprises subjecting materials containing a component (a), a component (b), and an optional component (c) to a reaction to obtain the hydrophilically-modified polyisocyanate;
(a) is at least one polyisocyanate,
(b) is at least one amino-sulfonic acid, and
(c) is at least one tertiary amine;
wherein in the amino-sulfonic acid, particles with a particle size of ≤ 900 mesh are less than 10wt%, preferably less than 5wt%, and more preferably less than 3wt%, and particles with a particle size of > 40 mesh are less than 10wt%, preferably less than 5wt%, and more preferably less than 3wt%.

2. The method according to claim 1, wherein the amino-sulfonic acid has a structure formula shown below: 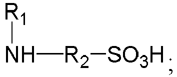 in the structural formula, R₁ is cyclohexyl, cyclohexylmethyl, *p*-methylcyclohexyl, 2-methylcyclohexyl, 2,3-dimethylcyclohexyl, 3,3,5-trimethylcyclohexyl, 4-*tert*-butylcyclohexyl, cycloheptyl, cyclooctylmethyl, norborn-2-yl, adamant-2-yl, or 3,5-dimethyl-adamant-1-yl, and R₂ is a linear or branched aliphatic group having 2 to 6 carbon atoms.

3. The method according to claim 2, wherein the amino-sulfonic acid (b) is selected from one or more of 2-(cyclohexylamino)ethanesulfonic acid, 3-(cyclohexylamino) propanesulfonic acid, and 4-(cyclohexylamino)butanesulfonic acid.

4. The method according to claim 1, wherein a component (d), a weak acid with pKa > 1, is optionally added to the reaction system;
preferably, a molar ratio of the weak acid to the amino-sulfonic acid is 0-0.3, and preferably 0.002-0.1.

5. The method according to claim 4, wherein the component (d) is selected from one or more of dibutyl phosphate, bis(2-ethylhexyl) phosphate, phosphoric acid, or adipic acid.

6. The method according to claim 4, wherein the method comprises subjecting materials containing the component (a), the component (b), the component (c), and the component (d) to a reaction to obtain the hydrophilically-modified polyisocyanate.

7. The method according to any one of claims 1-6, wherein a usage amount of the amino-sulfonic acid is 0.5-10% of a total mass of the polyisocyanate and the amino-sulfonic acid;
and/or, a molar ratio of the tertiary amine to the amino-sulfonic acid is 0-1.1, preferably 0.9-1.1;
and/or, the reaction is performed at 70-110°C.

8. The method according to any one of claims 1-6, wherein the polyisocyanate is an aliphatic polyisocyanate, a cycloaliphatic polyisocyanate, an araliphatic polyisocyanate, and/or an aromatic polyisocyanate; preferably, the polyisocyanate contains a structure of uretdione, isocyanurate, carbamate, allophanate, biuret, iminooxadiazinedione, and/or oxadiazinetrione; preferably, a diisocyanate used for preparing the polyisocyanate is selected from one or a combination of at least two of tetramethylene-1,4-diisocyanate, pentamethylene-1,5-diisocyanate, hexamethylene-1,6-diisocyanate, dodemethylene-1,12-diisocyanate, 1,4-cyclohexane diisocyanate, isophorone diisocyanate, 4,4'-dicyclohexylmethane diisocyanate, 4,4'-dicyclohexylpropane diisocyanate, 1,4-phenylene diisocyanate, 2,4-toluene diisocyanate, 2,6-toluene diisocyanate, 4,4'-diphenylmethane diisocyanate, 2,2'-diphenylmethane diisocyanate, 2,4'-diphenylmethane diisocyanate, tetramethylxylene diisocyanate, and *p*-xylylene diisocyanate;
and/or, the tertiary amine is selected from one or more of N,N-dimethyl butylamine, N,N-diethyl methylamine, N,N-diisopropyl ethylamine, N,N-dimethyl cyclohexylamine, N-methylpiperidine, and N-ethylmorpholine;
and/or, a catalyst is optionally added to the reaction system, and the catalyst is selected from one or more of a tertiary amine catalyst which is different from the component (c), or an organometallic catalyst;
and/or, an antioxidant is optionally added to the reaction system.

9. A hydrophilically-modified polyisocyanate prepared by the method according to any one of claims 1-8.

10. An application of the hydrophilically-modified polyisocyanate prepared by the method according to any one of claims 1-8 or the hydrophilically-modified polyisocyanate according to claim 9 for preparing a coating agent, an adhesive or a sealant, or as a starting component for producing a polyurethane plastic.
